# FASCICULE DE BREVET EUROPEEN

(11) **EP 0 887 997 B1**
(45) Date de publication et mention de la délivrance du brevet: **06.08.2003**
(21) Numéro de dépôt: 98203239.3
(22) Date de dépôt: 26.01.1994
(51) Int. Cl.: H04N 1/44

(54) **Procédé de transmission sécurisé point à point de télécopies**
Verfahren zur sicheren Fernkopierübertragung
Method for secure point to point facsimile transmission

(30) Priorité: 28.01.1993 FR 9300867
(43) Date de publication de la demande: 30.12.1998
(62) Demande divisionnaire de: 94400164.3
(73) Titulaire: FRANCE TELECOM, 75015 Paris (FR); LA POSTE, 92777 Boulogne Billancourt Cédex (FR)
(72) Inventeur: Le Corre, Hervé, 14930 Eterville (FR); Girault, Marc, 14000 Caen (FR); Revillet, Marie-Josèphe, 78220 Viroflay (FR)
(74) Mandataire: Audier, Philippe André

(56) Documents cités:
- EP-A- 0 516 898
- EP-A- 0 542 703
- EP-A- 0 547 837
- WO-A-92/09161
- GB-A- 2 217 949
- US-A- 4 926 325

## Description

### DOMAINE TECHNIQUE

La présente invention concerne un procédé de transmission sécurisé point-à-point de télécopies.

### ÉTAT DE LA TECHNIQUE ANTÉRIEURE

Les points forts du service de télécopie sont la simplicité d'emploi, l'utilisation du réseau téléphonique public, la transmission directe. Mais il existe un point faible : la sécurité. Ce dernier point exclut de conférer un statut juridique à un document transmis en télécopie.

En effet, les niveaux de sécurité offerts par les télécopieurs de l'art connu sont insuffisants et inadaptés à la demande de certains utilisateurs. Les besoins en matière de sécurité en télécopie sont multiples : confidentialité, authentification, intégrité, non-répudiation, détection de rejeu.

Les télécopieurs actuellement sur le marché n'offrent pas, par exemple, de réelle assurance d'intégrité, les altérations pouvant être dues à des incidents de transmission, de scannérisation, d'impression, ou à des actes volontaires de falsification.

Des appareils de chiffrement ont été développés par divers constructeurs afin de remédier à ce manque de sécurité, mais ils ne sont basés que sur le chiffrement et ne permettent pas une large utilisation, dans un groupe ouvert d'abonnés. De plus ils nécessitent un échange préalable de clés.

Un document de l'art antérieur US-A-5 157 726 décrit un système pour authentifier une sortie sur support papier d'un document original qui comprend, du côté émetteur, une première machine de copiage spéciale, avec utilisation d'une carte d'identification pour activer cette machine, et du côté récepteur une seconde machine de copiage similaire à la première. La première machine de copiage, à partir du document original, génère une signature qui est apposée sur la copie, constituant ainsi une copie du document original signée numériquement.

L'invention a pour objet de donner un niveau de sécurité suffisant au service de télécopie sur réseau téléphonique commuté public, afin de répondre aux besoins des utilisateurs en matière de sécurité et de permettre une reconnaissance juridique pour les documents transmis par ce service.

### EXPOSÉ DE L'INVENTION

L'invention concerne un procédé de transmission sécurisé point-à-point de télécopies selon la revendication 1.

Avantageusement l'invention permet d'obtenir les résultats suivants :
- pour l'utilisateur émetteur :
   - recevoir un accusé de réception, pour être certain que le télécopieur destinataire a bien reçu le document,
   - éviter une répudiation en réception, pour pouvoir prouver a posteriori qu'il a bien envoyé le document ;
- pour l'utilisateur destinataire :
   - permettre une authentification de l'expéditeur, pour être certain de son identité,
   - éviter une répudiation en émission, pour pouvoir prouver a posteriori qu'il a bien reçu le document ;
- pour les deux télécopieurs émetteur et destinataire :
   - obtenir la confidentialité : pour s'assurer qu'aucune personne non autorisée ne puisse prendre connaissance des informations transmises,
   - obtenir l'intégrité : pour s'assurer que les informations transmises ne sont pas modifiables sans que le destinataire s'en aperçoive,
   - éviter tout rejeu : pour qu'il soit impossible de refaire à la place de l'émetteur une communication identique.

### BRÈVE DESCRIPTION DES DESSINS

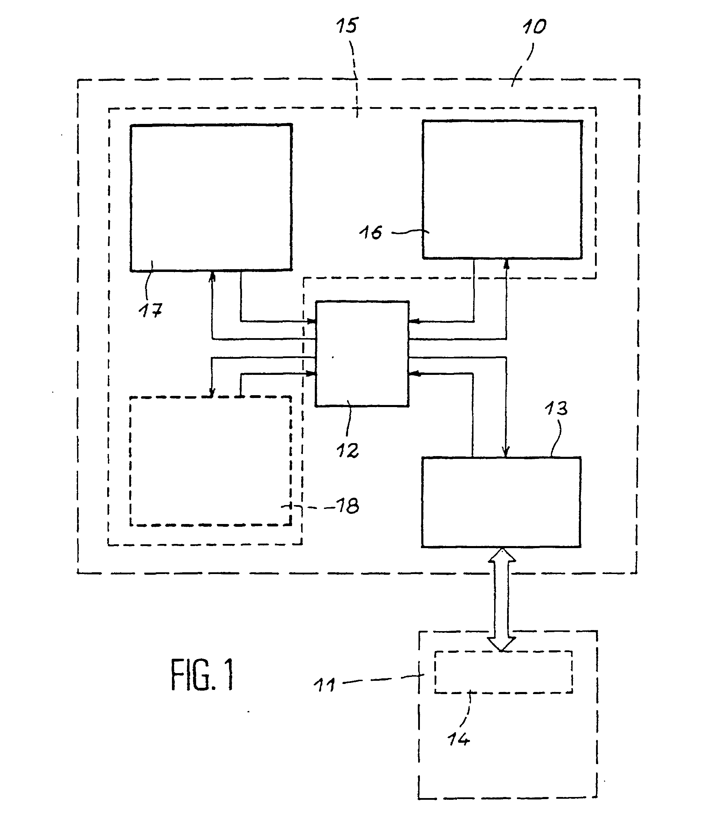

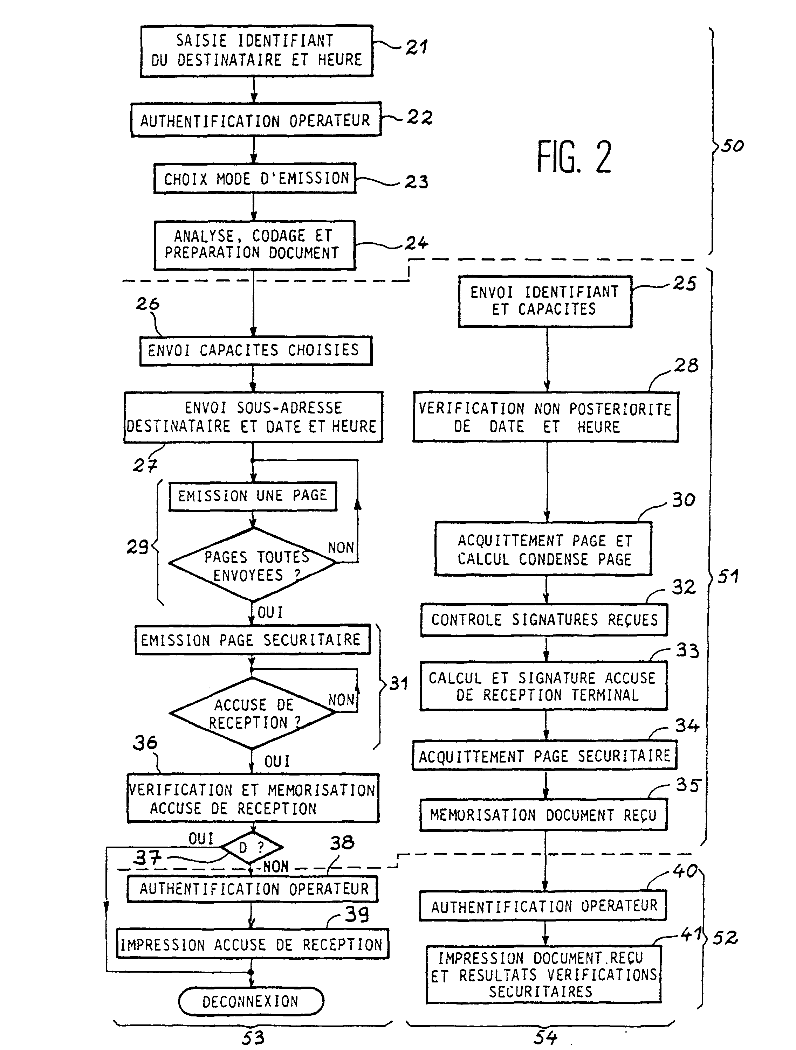

◆ La figure 1 illustre un télécopieur apte à mettre en oeuvre le procédé de sécurisation de l'invention
◆ la figure 2 représente un organigramme du procédé de transmission de télécopies de l'invention.

### EXPOSÉ DÉTAILLÉ DE MODES DE RÉALISATION PARTICULIERS

La figure 1 illustre la liaison entre deux télécopieurs émetteur et destinataire 10 et 11. Le premier télécopieur 10 comprend un organe de contrôle 12 comportant une mémoire de masse et un module de communication 13 qui peut communiquer avec le module de communication 14 du second télécopieur 11.

Le premier télécopieur 10 (et éventuellement le télécopieur 11) comprend, de plus, un dispositif de sécurisation 15.

Ce dispositif 15 comprend :
- un module interface utilisateur 16 qui permet le dialogue avec celui-ci ;
- un module de sécurité 17 qui permet la production et la vérification de signatures numériques et la lutte contre le « rejeu », et qui peut comporter avantageusement un lecteur de carte à mémoire apte à lire une telle carte propre à chaque utilisateur (ou groupe d'utilisateurs).

Ce dispositif peut comprendre en outre :
- un module de chiffrement et de déchiffrement 18 qui n'existe que lorsque les deux télécopieurs 10 et 11 ont besoin de confidentialité en mode émission. Dans ce cas le télécopieur 11 doit également comprendre ce module ainsi que le module de sécurité.

Ce dispositif 15 peut être un dispositif autonome destiné à compléter un télécopieur classique, ou un dispositif interne, partie d'un télécopieur appartenant à une nouvelle génération de télécopieurs dits « sécurisés ».

L'invention concerne un procédé de transmission sécurisé point-à-point de télécopies. Un tel procédé comprend :
- une étape 50 de préparation du télécopieur émetteur ;
- une étape 51 de transmission ;
- une étape 52 de consultation.

Ces étapes de fonctionnement sont représentées sur la figure 2, du côté émetteur 53 et du côté récepteur 54. Après la mise en place du document à émettre sur le plateau du télécopieur émetteur, ou la sélection éventuelle d'un document déjà mémorisé dans la mémoire de ce télécopieur, pendant l'étape 50 de préparation du télécopieur émetteur :
- on saisit l'identifiant du destinataire (phase 21) ou on le consulte sur un annuaire électronique, et on saisit l'heure d'émission qui peut être immédiate ou différée ;
- on authentifie, éventuellement, l'opérateur auprès du module de sécurité par insertion de la carte à mémoire de celui-ci et saisie de son code secret (phase 22) ;
- si cette authentification a été réalisée correctement, on choisit le mode d'émission (phase 23), c'est-à-dire :
   * soit le mode standard qui est le mode de transmission des télécopieurs de l'art connu,
   * soit le mode sécurisé qui permet de répondre aux besoins d'intégrité, de non-répudiation et d'authentification tels que définis précédemment,
   * soit le mode chiffré qui permet de répondre aux besoins du mode sécurisé ainsi qu'au besoin de confidentialité, en précisant qu'un changement de mode (repli) est autorisé ;
- on analyse (scanner) et code le document,
ce qui permet de réduire le volume de celui-ci. On prépare « sécuritairement » le document avec calcul des condensés, calcul et mémorisation des signatures, éventuel chiffrement si celui-ci a été demandé, et génération d'une page sécuritaire (phase 24). Cette génération de page « sécuritaire » peut être remplacée par l'émission d'informations « sécuritaires » sur une ou sur toutes les pages du document considéré.

Le dialogue avec l'opérateur est alors terminé. Un message est émis, l'opérateur peut alors retirer sa carte à mémoire.

L'étape 51 de transmission peut alors commencer immédiatement, ou en différé, avec établissement automatique de la communication. Il y a envoi de part et d'autre de l'identifiant (CSI) du terminal et de ses capacités (deux bits pour la sécurité sécurisé, chiffrant dans la trame DIS) (phases 25 et 26) Ensuite, du côté télécopieur émetteur, pendant cette étape 51 :
- on envoie la sous-adresse du télécopieur destinataire, et la date-heure de signature de la première page dans la trame prévue pour le mot de passe (phase 27). Le terminal récepteur peut alors vérifier la non-postériorité de la date-heure (phase 28). S'il y a désaccord, le terminal récepteur est déconnecté ;
- on émet chaque page du document (phase 29), contenant éventuellement des informations sécuritaires.

Le terminal destinataire acquitte successivement chaque page et calcule le condensé de chaque page reçue (phase 30).

Le terminal émetteur émet éventuellement la page dite « sécuritaire » et attend un accusé de réception (phase 31).

Le terminal destinataire réalise une étape de vérification :
- il contrôle les signatures reçues à partir des condensés précalculés (phase 32) ;
- il calcule et signe l'accusé de réception « terminal » (phase 33) ;
- il acquitte la page « sécuritaire » ou les informations « sécuritaires » en joignant l'accusé de réception « terminal » (phase 34) ;
- il mémorise le document reçu dans un répertoire protégé (phase 35).

Après vérification et mémorisation de l'accusé de réception (phase 36), le terminal émetteur peut être alors déconnecté.

Pendant l'étape 52 de consultation immédiate ou en différée :
- du côté terminal émetteur (test 37 : déconnexion D ?), il y a :
   - authentification de l'opérateur auprès du module de sécurité (avec éventuelle insertion de la carte à mémoire et saisie du code secret) (phase 38),
   - impression (ou consultation) de l'accusé de réception terminal (phase 39) ;
- du côté terminal destinataire, il y a :
   - authentification de l'opérateur auprès du module de sécurité (avec éventuelle insertion de la carte à mémoire et saisie du code secret (phase 40),
   - impression (ou consultation) du document reçu et des résultats des vérifications sécuritaires (phase 41).

Le but de l'invention est donc que tout télécopieur puisse recevoir des télécopies ayant un niveau minimum de sécurité. Par contre, pour envoyer des télécopies sécurisées, les télécopieurs émetteurs doivent appartenir à une nouvelle génération, ou utiliser le dispositif de sécurisation défini ci-dessus, placé en coupure sur la ligne téléphonique. Par la suite on appellera indifféremment « télécopieur sécurisé », un terminal de nouvelle génération, ou un terminal classique complété par le dispositif de sécurisation de l'invention générant entre autres le mode correction d'erreur.

Les télécopieurs sécurisés disposent du mode correction d'erreur du protocole « des procédures pour la transmission par télécopie de documents dans le réseau téléphonique connecté public » dénommé « T30 » recommandé par le CCITT, de la possibilité d'interpréter des pages en mode caractère. Ils disposent en outre d'un module de sécurité 17.

Pour les terminaux multi-utilisateurs, le mode de sécurité 17 est composé d'un lecteur de cartes à mémoire pouvant lire une carte à mémoire, propre à chaque utilisateur. Dans le cas d'un terminal mono-utilisateur, ou protégé physiquement, le module de sécurité est intégré dans le télécopieur.

Dans les deux cas ce module de sécurité 17 permet de signer et, optionnellement, de générer une clé de session pour un chiffrement éventuel des documents à émettre. Le chiffrement proprement dit est effectué dans le télécopieur par le module de chiffrement et de déchiffrement 18.

Aucune trame supplémentaire n'est nécessaire dans le protocole « T30 », mais quelques aménagements doivent être apportés ; entre autres, un accusé de réception doit être généré par le terminal destinataire pour compléter le signal de confirmation de message, dénommé « MCF » dans ce protocole.

Chaque personne utilisatrice en mode sécurisé doit avoir son propre code ou identifiant, qui est transmis dans le protocole.

Les mécanismes de base choisis dans l'invention pour répondre à ces besoins de sécurité sont donc la signature numérique et le chiffrement. Le chiffrement n'est utilisé que dans le cas où l'émetteur a besoin de confidentialité en mode connexion. Mais l'utilisation de ces mécanismes nécessite la transmission d'informations sécuritaires. Ces informations sont transmises avantageusement dans la page supplémentaire, dite « sécuritaire » ajoutée au document et générée par le télécopieur émetteur.

Chaque information transmise en en-tête de cette page « sécuritaire » est numériquement signée, ces signatures figurent sur la page sécuritaire. Ces informations sont les identifiants des personnes émettrice et destinataire, l'aléa ayant permis de générer les signatures, la date et l'heure de début de transmission du document, le nombre de pages transmises (la page sécuritaire non comprise). Le corps de la page contient le numéro suivi de la signature de chaque page du document transmis en mode sécurisé (la page sécuritaire non comprise).

La page « sécuritaire » est transmise soit en mode caractère, soit en format graphique (c'est-à-dire codée dans l'un des modes de codage d'image approprié à la télécopie) si le télécopieur du destinataire ne possède pas des capacités nécessaires à l'interprétation du mode caractère de la page sécuritaire.

Lorsque la page sécuritaire est reçue, en mode caractère, le télécopieur destinataire sécurisé régénère cette page en mode graphique afin que l'utilisateur puisse en conserver un exemplaire « papier ».

le « bitmap » est un fichier qui peut être obtenu par scannérisation d'un document. Ce fichier est différent pour chaque scannérisation d'un même document. Pour sa signature, il est proposé de signer numériquement ce fichier codé dans un des modes recommandés pour la télécopie. Le destinataire devra vérifier ces signatures à la réception et mettre en mémoire le document pour toute vérification ultérieure.

L'utilisateur désirant émettre une télécopie sécurisée doit insérer sa carte à mémoire contenant ses clés secrètes afin qu'elle calcule les signatures et génère une clé de session si besoin est.

Sur un télécopieur sécurisé, si la carte à mémoire du destinataire est insérée au moment de la réception, le déchiffrement s'effectue en ligne ; sinon le document est stocké chiffré dans la boîte aux lettres de celui-ci et déchiffré au moment de la consultation.

En cas d'émission vers un télécopieur sécurisé, le télécopieur récepteur vérifie que la date-heure du document émis n'est pas postérieure à sa propre date (à un epsilon près), sinon le récepteur déconnecte la communication. On appelle date-heure, la date et l'heure de signature de la première page du document émis. En cas de communication internationale, il est nécessaire d'utiliser l'heure G.M.T.

On entend par clé de session, la suite de bits qui est utilisée pour générer la suite pseudo-aléatoire utilisée pour chiffrer le fichier bitmap codé. La suite pseudo-aléatoire doit être la même chez l'émetteur et le destinataire. La clé de session est générée par un algorithme basé sur l'identité, qui permet sans aucun échange de calculer un secret détenu par les deux correspondants et eux seuls.

Chaque entité (émetteur A ou destinataire B) désireuse d'utiliser les fonctions de chiffrement/déchiffrement possède une clé secrète « S » générée par une autorité, à partir de son identifiant « I ».

Une clé K_{AB} = g (S_{A}, I_{B}) = g(S_{B},I_{A}) sert à générer une clé de session. La clé K_{AB} est diversifiée par un aléa (par exemple la date-heure) afin de générer une clé de session K : K = f(K_{AB}, aléa) .

Pour une communication, l'émetteur A et le destinataire B disposent donc d'une clé commune qu'ils sont seuls à pouvoir générer puisque seuls possesseurs d'une des clés secrètes S_{A} ou S_{B}. Les paramètres à transmettre sont l'aléa et l'identité de l'émetteur.

Il n'y a pas de contrainte particulière sur la signature puisque le signataire a la faculté d'envoyer facilement des informations sécuritaires. La signature de chacune des pages soit mettre en jeu des éléments secrets mémorisés dans la carte à mémoire de l'utilisateur, et un aléa (la date-heure par exemple), ainsi que le numéro de la page.

Les éléments secrets (ou clés secrètes) de chaque utilisateur sont stockés dans sa carte à microprocesseur. Chaque carte possède essentiellement trois éléments secrets :
- le premier élément est un code confidentiel, permettant à la carte d'authentifier son légitime propriétaire ;
- le second élément (SA voir plus haut) permet à la carte de l'émetteur de calculer une clé de session commune avec la carte du destinataire. Cette clé de session servira à chiffrer le document ;
- le troisième élément permet à la carte de l'émetteur de calculer une signature numérique, vérifiable par n'importe quelle autre carte appropriée à cette invention.

En plus de ces éléments secrets, la carte doit contenir l'identifiant de l'utilisateur.

Chacun des services de sécurité suivants est basé sur la mécanisme de signature (vérification de signature) appliqué à des données différentes :
- l'intégrité repose sur la signature. Elle est effectuée pour chaque page. Toutes les signatures sont transmises sur la page « sécuritaire », en fin de document. La signature d'une page porte sur le contenu de la page, le numéro de page et l'aléa ;
- le rejeu est une fraude consistant à réémettre, parfois à l'insu du véritable émetteur, un document vers un même destinataire sans que celui-ci ne puisse s'en apercevoir. Les télécopieurs sécurisés, en réception, mémorisent les heures de signature et les identifiants des émetteurs des communications ayant eu lieu dans les dernières quarante huit heures. Le télécopieur récepteur devra mettre en garde le destinataire :
   - si l'écart entre la date-heure de transmission est supérieur à quarante huit heures,
   - si la même date-heure pour un même émetteur a déjà été enregistrée durant les dernières quarante huit heures.

La date-heure signée par l'émetteur est transmise dans la page « sécuritaire ». Elle est également transmise, non signée, en début de protocole dans la trame PWD (« Pass-Word ») du protocole « T30 ».
- Le destinataire authentifie l'émetteur en vérifiant la signature de l'identifiant de l'émetteur transmise en page « sécuritaire ».
- Pour se protéger d'un émetteur malhonnête contestant le contenu d'un document, le destinataire doit conserver, sous forme électronique, le document reçu associé à la signature. Cette fonction impose des capacités de stockage électronique chez le destinataire. La conformité de la signature avec le document présenté et l'identité de l'émetteur permet à un juge d'authentifier le document.
- Pour se protéger d'un destinataire malhonnête contestant le contenu d'un document, l'émetteur est obligé de conserver celui-ci sous forme électronique. Pour différencier les deux documents présentés devant un juge, on vérifie la signature du document émis et celle du document reçu. Le destinataire peut toujours prétendre ne pas avoir reçu le document, mais il est possible de juger de la bonne foi de l'émetteur si le destinataire déclare l'avoir reçu.
- Le terminal destinataire peut confirmer la bonne réception du document en retournant, après vérification des signatures de chaque page du document, un accusé de réception. Cet accusé est constitué de la signature du contenu de la page « sécuritaire » ou des informations « sécuritaires » et d'un octet d'information contenant les éventuels motifs de refus de réception du document. Cette suite d'octets est transmise dans le signal d'acquittement positif « MCF » de la recommandation « T30 » du CCITT, dont la présente invention propose l'extension.

La confidentialité en mode connexion d'un document transmis est assurée par le chiffrement des données télécopie. Le chiffrement est appliqué après codage du document par les algorithmes recommandés pour la télécopie, ceci afin de ne pas suite à l'efficacité de la compression que permettent ces algorithmes.

La confidentialité hors connexion est assurée par un mécanisme de « boite aux lettres » personnelle accessible à l'utilisateur sous réserve de présentation de sa carte à mémoire et du code confidentiel associé.

## Revendications

1. Procédé de transmission sécurisé point-à-point de télécopies, **caractérisé en ce qu'**il met en oeuvre un dispositif de sécurisation de transmission de télécopies comprenant au moins un module de sécurité (17) et **en ce qu'**il comprend :
- une étape (50) de préparation d'un télécopieur émetteur pendant laquelle :
• on saisit au moins l'identifiant du destinataire (phase 21) et l'heure d'émission,
• on choisit le mode d'émission (phase 23),
• on analyse, on code et on prépare le document à émettre avec calcul des condensés, calcul et mémorisation de signatures (phase 24).
- une étape (51) de transmission pendant laquelle :
• les télécopieurs émetteur et destinataire envoient chacun (phase 25 et 26), leur identifiant et leurs capacités correspondants,
• le télécopieur émetteur envoie la sous-adresse du télécopieur destinataire et la date-heure de signature de la première page dans la trame prévue pour un mot de passe (phase 27), puis émet chaque page de document (phase 29) ainsi que des informations sécuritaires,
• le télécopieur destinataire acquitte successivement chaque page de document, calcule le condensé de chaque page reçue (phase 30),
• le télécopieur destinataire réalise une étape de vérification :
◆ il contrôle les signatures reçues (phase 34),
◆ il calcule et signe l'accusé de réception (phase 33),
◆ il acquitte les informations sécuritaires en joignant l'accusé de réception (phase 34),
◆ il mémorise le document reçu dans un répertoire protégé (phase 35).
• le télécopieur émetteur attend un accusé de réception (phase 31), puis vérifie et mémorise ledit accusé de réception,
- une étape (52) pendant laquelle :
• le télécopieur émetteur authentifie l'opérateur auprès du module de sécurité (17) (phase 38) et imprime l'accusé de réception (phase 39),
• le télécopieur destinataire authentifie l'opérateur auprès du module de sécurité (17) (phase 40) et imprime le document reçu et les résultats des vérifications sécuritaires (phase 41).

2. Procédé selon la revendication 1, dans lequel le mode d'émission est :
- soit le mode standard,
- soit un mode sécurisé,
- soit un mode chiffré,

3. Procédé selon la revendication 1, dans lequel le télécopieur destinataire vérifie la non-postériorité de la date-heure (phase 28), ce télécopieur étant déconnecté s'il y a désaccord.

4. Procédé selon la revendication 1, dans lequel le télécopieur émetteur émet une page dite « sécuritaire »

## Patentansprüche

1. Verfahren zur gesicherten Punkt-zu-Punkt-Übertragung von Fernkopien, **dadurch gekennzeichnet, dass** es eine Vorrichtung zum Sichern der Übertragung von Fernkopien einsetzt, die mindestens ein Sicherheitsmodul (17) aufweist, und dass es umfasst:
- einen Schritt (50) der Vorbereitung eines sendenden Fernkopierers, während dem
• mindestens der Identifizierer des Empfängers (Phase 21) und die Sendezeit erfasst werden,
• ein Sendemodus gewählt wird (Phase 23),
• das zu sendende Dokument mit einer Berechnung des Kondensats sowie einer Berechnung und Speicherung von Signaturen analysiert, codiert und vorbereitet wird (Phase 24) wird,
- einen Schritt (51) der Übertragung, während dem
• die sendenden bzw. empfangenden Fernkopierer jeweils ihren Identifizierer und ihre entsprechenden Kapazitäten senden (Phase 25 und 26)
• der sendende Fernkopierer die Unteradresse des empfangenden Fernkopierers und Datum und Stunde der Signatur der ersten Seite in dem für ein Passwort vorgesehenen Abschnitt sendet (Phase 27), und anschließend jede Dokumentenseite (Phase 29) sowie Sicherungsinformationen sendet,
• der empfangende Fernkopierer nacheinander jede Dokumentenseite bestätigt und das Kondensat jeder empfangenen Seite berechnet (Phase 30),
• der empfangende Fernkopierer einen Überprüfungsschritt vornimmt, wobei:
◇ er die empfangenen Signaturen kontrolliert (Phase 34),
◇ er die Empfangsbestätigung berechnet und signiert (Phase 33),
◇ er die Sicherheitsinformationen bestätigt, indem er die Empfangsbestätigung hinzufügt (Phase 34),
◇ er das empfangene Dokument in einem geschützten Verzeichnis speichert (Phase 35),
• der sendende Fernkopierer auf eine Empfangsbestätigung wartet (Phase 31), dann die Empfangsbestätigung überprüft und speichert,
- einen Schritt (52), während dem:
• der sendende Fernkopierer den Operator beim Sicherheitsmodul (17) authentifiziert (Phase 38) und die Empfangsbestätigung ausdruckt (Phase 39),
• der empfangende Fernkopierer den Operator beim Sicherheitsmodul (17) authentifiziert (Phase 40) und das empfangene Dokument sowie die Ergebnisse der Sicherheitsüberprüfungen druckt (Phase 41).

2. Verfahren nach Anspruch 1, wobei der Sendemodus ist:
- entweder der Standard-Modus,
- oder einer gesicherter Modus,
- oder ein chiffrierter Modus.

3. Verfahren nach Anspruch 1, wobei der empfangende Fernkopierer die Nicht-Nachzeitigkeit (non-posteriorité) des Datums und der Uhrzeit überprüft (Phase 28), wobei der Anschluss dieses Fernkopierers unterbrochen wird, wenn keine Übereinstimmung herrscht.

4. Verfahren nach Anspruch 1, wobei der sendende Fernkopierer eine sogenannte "Sicherungs"-Seite sendet.

## Claims

1. Method for secure point-to-point transmission of facsimiles, **characterized in that** it implements a facsimile transmission security device comprising at least one security module (17) and **in that** it comprises,
- a step (50) of preparing a sender fax machine during which:
• at least the identifier of the recipient (phase 21) and the send time are input,
• the send mode is chosen (phase 23),
• the document to be sent is analysed, coded and prepared together with calculation of the digests, calculation and storage of signatures (phase 24).
- a step (51) of transmission during which:
• the sender and recipient fax machines each despatch (phase 25 and 26), their identifier and their corresponding capabilities,
• the sender fax machine despatches the subaddress of the recipient fax machine and the date/time of signature of the first page in the frame provided for a password (phase 27), then sends each document page (phase 29) as well as security information,
• the recipient fax machine acknowledges each document page in succession, calculates the digest of each page received (phase 30),
• the recipient fax machine carries out a verification step:
◆ it checks the signatures received (phase 34),
◆ it calculates and signs the acknowledgement of receipt (phase 33),
◆ it acknowledges the security information by attaching the acknowledgement of receipt (phase 34),
◆ it stores the document received in a protected directory (phase 35).
• the sender fax machine waits for an acknowledgement of receipt (phase 31), then verifies and stores the said acknowledgement of receipt,
- a step (52) during which:
• the sender fax machine authenticates the operator at the security module (17) (phase 38) and prints the acknowledgment of receipt (phase 39),
• the recipient fax machine authenticates the operator at the security module (17) (phase 40) and prints the document received and the results of the security verifications (phase 41).

2. Method according to Claim 1, in which the send mode is:
- either the standard mode,
- or a secure mode,
- or an enciphered mode.

3. Method according to Claim 1, in which the recipient fax machine verifies the non-posteriority of the date/time (phase 28), this fax machine being disconnected if there is disagreement.

4. Method according to Claim 1, in which the sender fax machine sends a so-called "security" page.
